# EUROPEAN PATENT APPLICATION

(11) **EP 2 428 883 A1**
(43) Date of publication of application: **14.03.2012**
(21) Application number: 11164702.0
(22) Date of filing: 04.05.2011
(51) Int. Cl.: G06F 3/048

(54) **Electronic apparatus and display method of display screen**

(30) Priority: 13.09.2010 JP 2010204803
(71) Applicant: Kabushiki Kaisha Toshiba, Tokyo 105-8001 (JP)
(72) Inventor: Hidaka, Ryo, Tokyo (JP)
(74) Representative: Henkel, Breuer & Partner

(57) **Abstract**

According to one embodiment, an electronic apparatus includes: a display unit which displays a display screen including link displays which are display information of link destinations; and a selecting module which selects a prescribed area in the display screen as a selected range. The selecting module displays link displays included in the selected range in a first display form which is discriminated from link displays excluded from the selected range, and displays a focused link display in a second display form which is different from the first display form.

## Description

### FIELD

Embodiments described herein relate generally to an electronic apparatus which can connect to the Internet.

### BACKGROUND

In recent years, electronic apparatus capable of connecting to the Internet have spread with the establishment of a necessary environment.

The Internet provides various services. For example, a browser which is a display picture shows display information of link destinations (hereinafter, it is described as "link display") linked to the browser. The user can access each link destination using its link display.

In many cases, a number of link displays are shown in a browser picture.

Personal computers (PCs) are provided with pointing devices such as a mouse, a touch pad, and a track ball, input devices for selecting a direction such as cursor keys and a mouse wheel, and a keyboard. And the display screen is in many cases placed close to the user. Therefore, the user who is, for example, sitting near the screen can select a desired link display while looking at a browser picture including many link displays. The user can thus access a desired link destination easily.

On the other hand, in the case of such electronic apparatus such as TV receivers, the user watches a TV program or a browser picture from a location that is distant from the display screen and makes an operation using a remote controller.

Where the user watches a TV program or a browser picture from a location that is distant from the display screen or the display screen is small, there is some difficulty selecting a desired link display or accessing a desired link destination by operating the remote controller. This is inconvenient to the user.

Such electronic apparatus as TV receivers are desired which facilitate the user's selecting a desired link display or accessing a desired link destination by operating a remote controller and can thereby increase the convenience of the user.

### BRIEF DESCRIPTION OF THE DRAWINGS

Fig. 1 is a block diagram showing a configuration of an electronic apparatus (TV receiver) according to an embodiment.
Fig. 2 shows an example display screen that is displayed by the electronic apparatus according to the embodiment and an example selecting module shown therein.
Fig. 3 shows the example display screen that is displayed by the electronic apparatus according to the embodiment and another example selecting module shown therein.
Fig. 4 shows the example display screen that is displayed by the electronic apparatus according to the embodiment and still another example selecting module shown therein.
Fig. 5 shows the example display screen that is displayed by the electronic apparatus according to the embodiment and another example selecting module shown therein.
Fig. 6 shows an example in which the selecting module has been moved upward in the display screen in the electronic apparatus according to the embodiment.
Fig. 7 shows an example in which a selecting module whose selected range is small relative to the display screen is used in the electronic apparatus according to the embodiment and long link displays are not displayed in a discriminated manner.
Fig. 8 shows an example in which a selecting module whose selected range is a little large relative to the display screen is used in the electronic apparatus according to the embodiment and short and medium-length link displays are displayed in a discriminated manner.
Fig. 9 shows an example in which a selecting module whose selected range is large relative to the display screen is used in the electronic apparatus according to the embodiment and every link display within the selected range can be selected.
Fig. 10 shows an example in which a selecting module whose selected range is large relative to the display screen is used in the electronic apparatus according to the embodiment and long link displays are excluded from selected subjects in advance (only link displays in the selected range excluding the long link displays can be selected).
Fig. 11 shows an example in which an elliptical selected range is employed in the electronic apparatus according to the embodiment and even link displays that are not completely within the selected range (i.e., link displays that overlap with the selected range) are displayed in a discriminated manner.
Fig. 12 shows an example remote controller used in the electronic apparatus according to the embodiment.
Fig. 13 is a flowchart of a process that is executed by the electronic apparatus according to the embodiment.
Fig. 14 shows another manner of display of the selecting module used in the electronic apparatus according to the embodiment.
Fig. 15 shows another manner of display of the selecting module used in the electronic apparatus according to the embodiment.
Fig. 16 shows still another manner of display of the selecting module used in the electronic apparatus according to the embodiment.
Fig. 17 shows another manner of display of the selecting module used in the electronic apparatus according to the embodiment.
Fig. 18 shows yet another manner of display of the selecting module used in the electronic apparatus according to the embodiment.
Fig. 19 shows a further manner of display of the selecting module used in the electronic apparatus according to the embodiment.

### DETAILED DESCRIPTION OF THE EMBODIMENTS

In general, according to one exemplary embodiment, an electronic apparatus includes: a display unit which displays a display screen including link displays which are display information of link destinations; and a selecting module configured to select a prescribed area in the display screen as a selected range, to display link displays included in the selected range in a first display form which is discriminated from link displays excluded from the selected range, and to display a focused link display in a second display form which is different from the first display form.

An embodiment of the present invention will be hereinafter described with reference to the drawings.

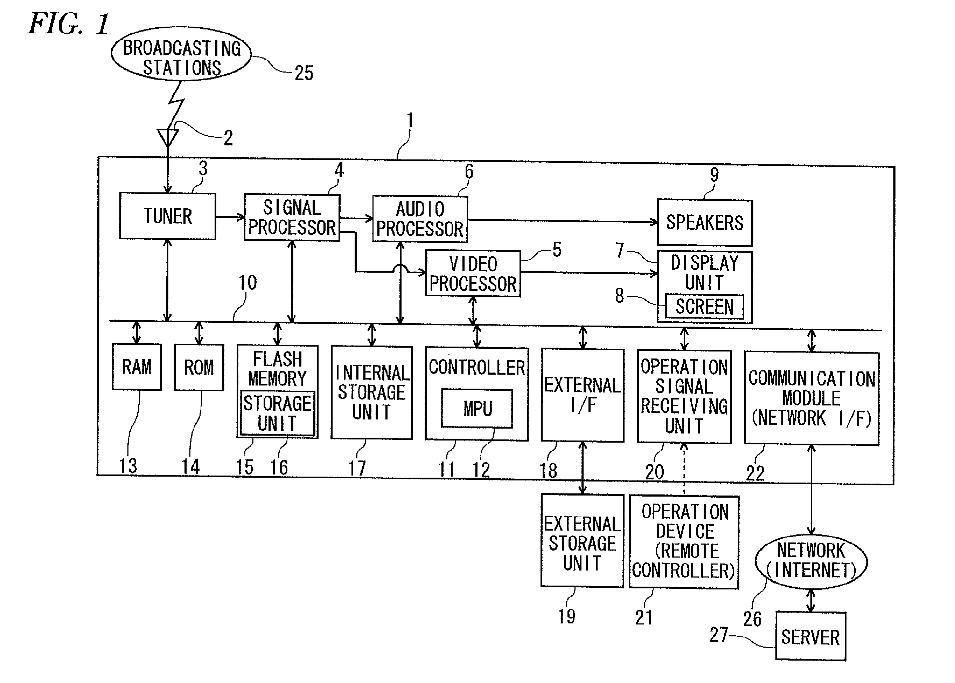

Fig. 1 is a block diagram showing the configuration of an electronic apparatus (TV receiver) 1 according to the embodiment. Reference numeral 2 denotes an antenna; 3, a tuner; 4, a signal processor; 5, a video processor; 6, an audio processor; 7, a display unit; 8, a screen; 9, speakers; 10, a bus; 11, a controller; 12, an MPU; 13, a RAM; 14, a ROM; 15, a flash memory; 16, a storage unit; 17, an internal storage unit; 18, an external interface; and 25, broadcasting stations.

The controller 11 includes the MPU 12 and controls the electronic apparatus 1. The RAM 13, the ROM 14, and the flash memory 15 are used for processing that is performed by the controller 11, for example.

For example, video contents are broadcast from the broadcasting stations 25 in the form of digital broadcasts. The digital broadcasts that are broadcast from the broadcasting stations 25 are received by the tuner and subjected to tuning processing. A resulting digital signal of a video content is supplied to the signal processor 4.

The digital signal of the video content is subjected to signal processing in the signal processor 4, and resulting signals are supplied to the audio processor 6 and the video processor 5.

The audio processor 6 receives the thus-processed audio signal of the video content, performs audio processing on it, and supplies resulting signals to the speakers 9. The speakers 9 receive the thus-processed audio signals and output a sound.

The video processor 5 receives the thus-processed video signal of the video content, performs video processing on the video content, and supplies a resulting signal to the display unit 7. The display unit 7 receives the thus-processed video signal and displays video on the screen 8 of an LCD panel or the like.

In the embodiment, equipped with the internal storage unit 17, the electronic apparatus (TV receiver) 1 can record the thus-received video content.

In the embodiment, an external storage unit 19 is connected to the electronic apparatus 1 by a USB connection or a LAN connection. The received video content can also be recorded in the external storage unit 19.

The user operates the electronic apparatus 1 using an operation device such as a remote controller 21.

As mentioned above, the various kinds of processing described above are controlled by the controller 11.

The electronic apparatus 1 is connected to a server 27 via a communication module (network interface) 22.

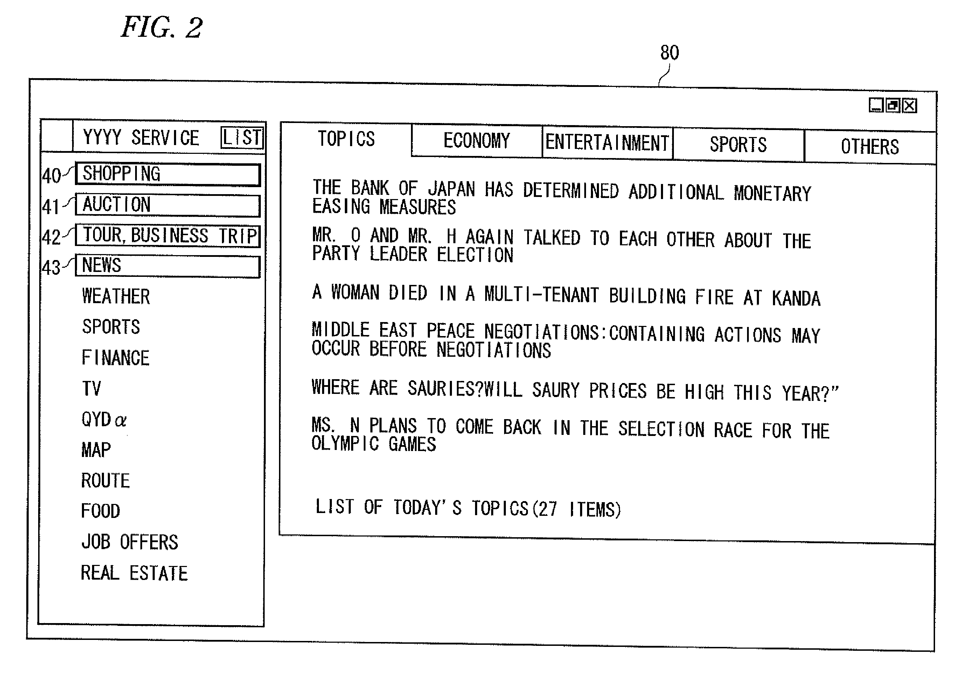

Fig. 2 shows an example display screen that is displayed by the electronic apparatus 1 according to the embodiment. In this example, the electronic apparatus 1 is displaying a browser image (Web page) 80 of a site "YYYY service" on the screen 8 of the display unit 7 by accessing the Internet. Plural link displays are shown in the display image 80.

For example, sets of characters "Shopping" 40, "Auction" 41, "Tour, business trip" 42, and "News" 43 shown in a left-hand column of the display screen 80 are link displays, respectively.
"Weather," "Sports," "Finance," "TV," etc. that follow the above sets of characters are also link displays.

In the center-to-right area of the display screen 80, a tab "topics" is selected and ``The Bank of Japan has determined additional monetary easing measures," "Mr. O and Mr. H again talked to each other about the party leader election," "A woman died in a multi-tenant building fire at Kanda," etc. are shown also as link displays.

The link displays shown in the left-hand column of the display screen 80 are short or medium-length link displays. On the other hand, the link displays shown in the center-to-right area of the display screen 80 are longer than those shown in the left-hand column.

The display screen 80 is an example picture that is displayed by accessing the site "YYYY Service" and in which a selecting module according to the embodiment that has, as a selected range, a range having a prescribed area is displayed by default.

The range having the prescribed area is set so as to have a vertical length of about 200 pixels and a horizontal length that is a little greater than the lengths of link displays to be selected. For example, where the selected range is a rectangle, its area is about 200 pixels by a length that is a little greater than the lengths of link displays to be selected.

In this example, the selecting module is displayed in such a manner that a link display (in this example, "Shopping" 40) close to the top-left corner of the picture 80 is focus-displayed and link displays that are located around that link display and are in the range having the prescribed area (selected range) are each enclosed by a thin line so as to be discriminated from other link displays.

Although in this example focus display is done using a thick line and link displays other than the focus-displayed link display that are located in the selected range are each shown so as to be enclosed by a thin line, these link displays may be shown in various manners, for example, in the form of different colors or shapes.

In this example, the default selecting module is displayed in the display screen 80. The link displays 40 to 43 that are located in the range whose area is a half of the selected range of the selecting module that is centered by the focus-displayed link display 40 are displayed in a discriminated manner.

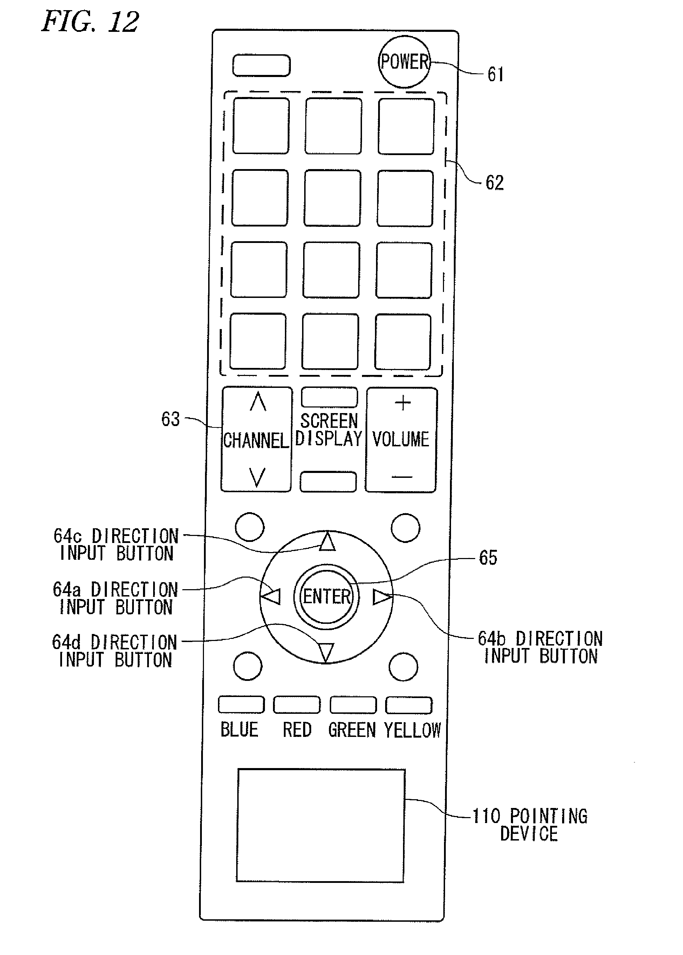

If, for example, an enter button 65 of a remote controller 60 (see Fig. 12; described later) is operated by the user in the state that the link display "Shopping" 40 is focus-displayed, access is made to the link Web page of "Shopping" 40. In other words, the focus display means that access can be made to the corresponding link destination by operating the enter button 65, for example.

The link displays "Auction" 41, "Tour, business trip" 42, and "News" 43 which are each enclosed by a thin line so as to be discriminated from other link displays are link displays located in the selected range. Each of the link displays 41 to 43 can be focus-displayed.

The focus is moved in the selected range (in the example of Fig. 2, a half of the selected range) of the selecting module according to an instruction that is output from a direction instructing module (64a-64d) such as cursor keys or four-direction keys that are provided in the remote controller 60 and used for instructing a movement in a display screen. In the display screen 80, the focus can be moved between the link displays "Shopping" 40, "Auction" 41, "Tour, business trip" 42, and "News" 43 according to an instruction from the direction instructing module.

As described above, the user causes a desired link display (e.g., "Shopping" 40) to be focus-displayed and operates, for example, the enter button 65 of the remote controller 60, whereupon the electronic apparatus 1 accesses the link destination corresponding to the desired link display.

The user can also move the selecting module in the display screen 80 by operating a pointing device 110 such as a touch pad or a track ball provided in the remote controller 60.

As described above, for example, the user can cause display of the display screen 80 including the link displays and move the selecting module in the display screen 80 by operating the pointing device 110 until it comes to include a desired link display. As a result, a focus-displayed link display is enclosed by a thick line and link displays other than the focus-displayed link display that are located in the selected range are each enclosed by a thin line so as to be discriminated from link displays located outside the selected range.

The selecting module need not always be moved until a desired link display is focus-displayed; it suffices that the selecting module be moved until a vicinity of the desired link display. Then, as described above, the user can focus-display the desired link display by moving the focus in the selected range of the selecting module using the direction instructing module such as cursor keys or four-direction keys for instructing a movement in a display screen.

The focus is moved between the link displays that are discriminated in the above described manner, according to an instruction from the direction instructing module.

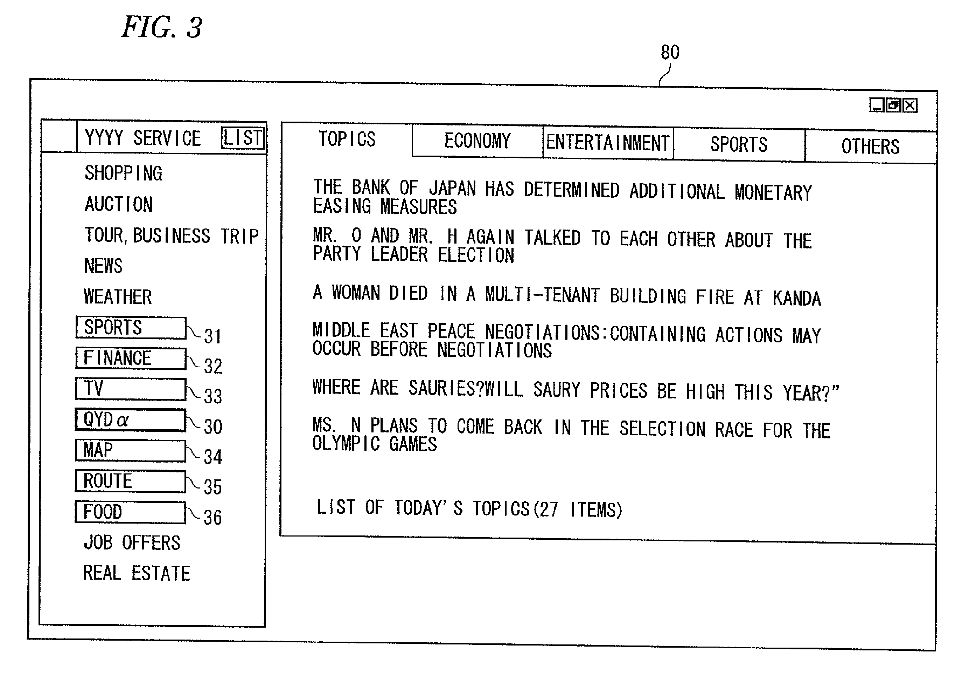

Fig. 3 shows the example display screen 80 that is displayed by the electronic apparatus 1 according to the embodiment and another example selecting module shown therein.

In this example, the user moves the selecting module by operating the pointing device 110 until it comes to include a desired link display in the display screen 80.

In this example, a link display "Qydα" 30 is focus-displayed. Link displays "Sports" 31, "Finance" 32, "TV" 33, "Map" 34, "Route" 35, and "Food" 36 are located in the selected range centered by the focus-displayed link display 30 and are each enclosed by a thin line so as to be discriminated from the link displays located outside the selected range.

That is, the link displays "Sports" 31, "Finance" 32, "TV" 33, "Qydα" 30, "Map" 34, "Route" 35, and "Food" 36 are link displays that are located in the selected range.

Also in this example, the focus is moved between the link displays that are discriminated in the above described manner, according to an instruction from the direction instructing module.

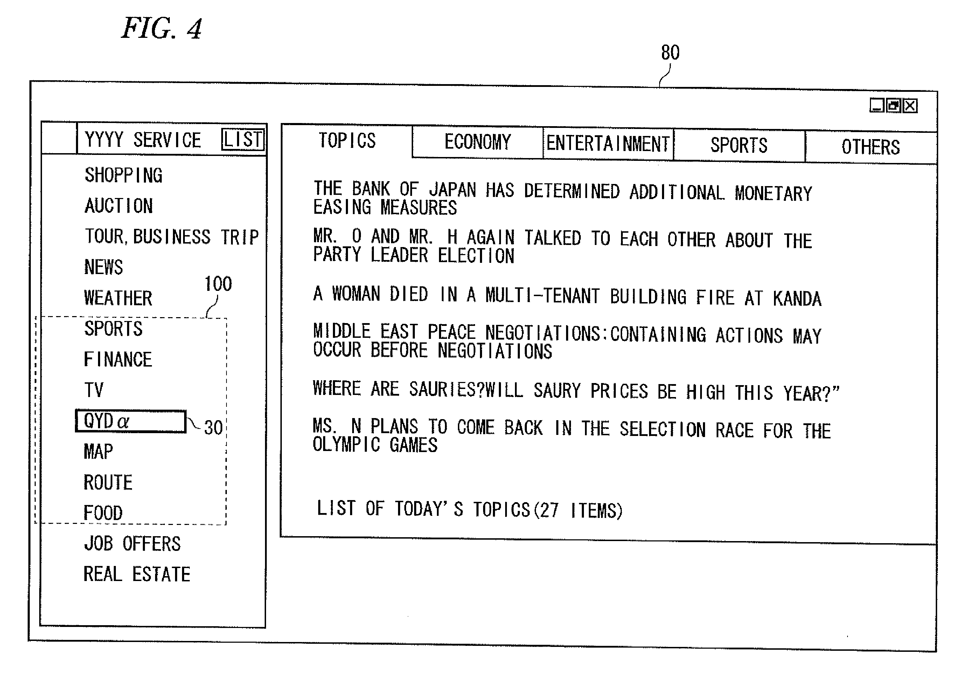

Fig. 4 shows the example display screen 80 that is displayed by the electronic apparatus 1 according to the embodiment and still another example selecting module shown therein.

As in the above examples, the user moves the selecting module by operating the pointing device 110 until it comes to include a desired link display in the display screen 80.

In this example, a link display "Qydα" 30 is focus-displayed. A selected range 100 is indicated by a broken line so as to be discriminated from the other items.

Link displays "Sports," "Finance," "TV," "Map," "Route," and "Food" are located in the selected range 100 and enclosed by the broken line, whereby they are discriminated from the link displays located outside the selected range 100.

That is, the link displays "Sports," "Finance," "(TV," "Qydα" 30, "Map," "Route," and "Food" are link displays that are located in the selected range 100.

In this example, the focus is moved between the link displays that are located in the selected range 100 and thereby discriminated in the above described manner, according to an instruction from the direction instructing module.

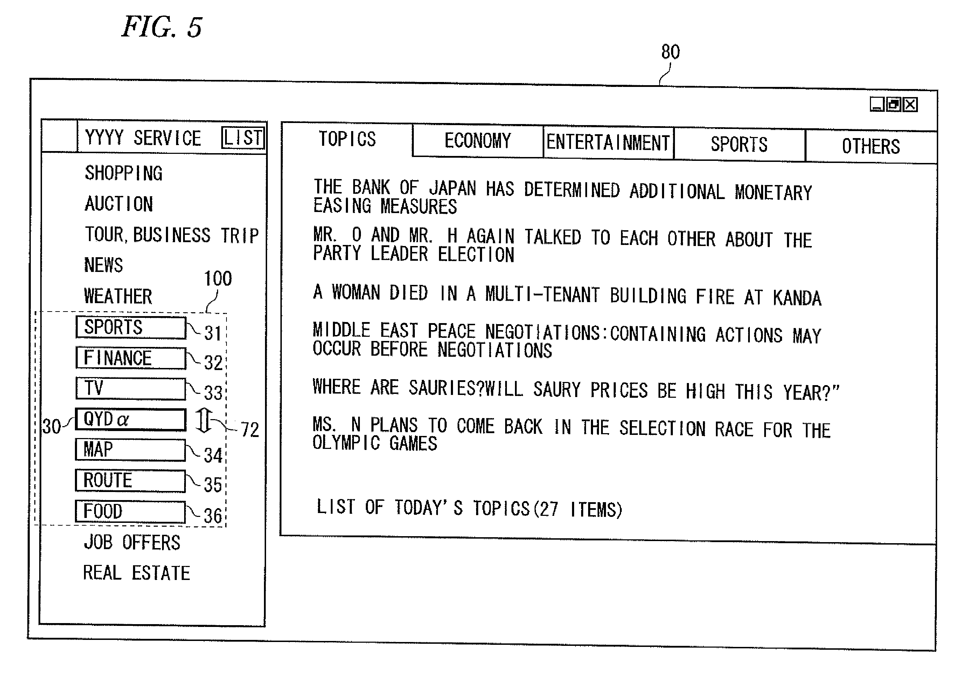

Fig. 5 shows the example display screen 80 that is displayed by the electronic apparatus 1 according to the embodiment and another example selecting module shown in the display screen 80.

As in the above examples, the user moves the selecting module by operating the pointing device 110 until it comes to include a desired link display in the display screen 80. A link display "Qydα" 30 is focus-displayed.

In this example, as in the example of Fig. 4, a selected range 100 is indicated by a broken line. Link displays "Sports" 31, "Finance" 32, "TV" 33, "Map" 34, "Route" 35, and "Food" 36 are located in the selected range 100 centered by the focus-displayed link display "Qydα" 30 and are enclosed by the broken line showing the selected range 100, whereby they are discriminated from the link displays located outside the selected range 100.

Furthermore, the link displays 31 to 36 are each enclosed by a thin line so as to be discriminated from the link displays located outside the selected range 100.

That is, the link displays "Sports" 31, "Finance" 32, "TV" 33, "Qydα" 30, "Map" 34, "Route" 35, and "Food" 36 are link displays that are located in the selected range 100.

Also in this example, the focus is moved between the link displays that are located in the selected range 100 and discriminated in the above described manner, according to an instruction from the direction instructing module.

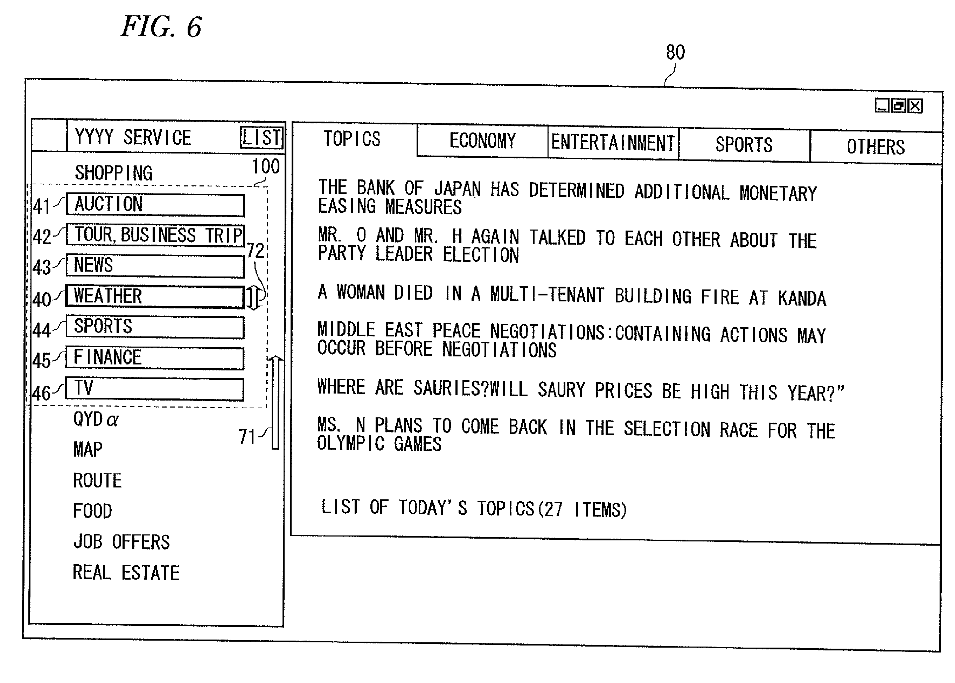

Fig. 6 shows an example in which a selecting module has been moved upward in the display screen 80 in the electronic apparatus 1 according to the embodiment.

As in the above examples, the user moves the selecting module by operating the pointing device 110 until it comes to include a desired link display in the display screen 80.

In this example, the controller 11 of the electronic apparatus 1 determines that link displays "Auction" 41, "Tour, business trip" 42, "News" 43, "Sports" 44, "Finance" 45, and "TV" 46 should be displayed in the selected range 100 of the selecting module and displays them so that they are enclosed by a broken line so as to be discriminated from the link displays located outside the selected range 100. A link display "Weather" 40 is focus-displayed, that is, enclosed by a thick line.

Also in this example, the focus is moved between the link displays that are located in the selected range 100 of the selecting module and discriminated in the above described manner, according to an instruction from the direction instructing module (64a-64d) of the remote controller 60.

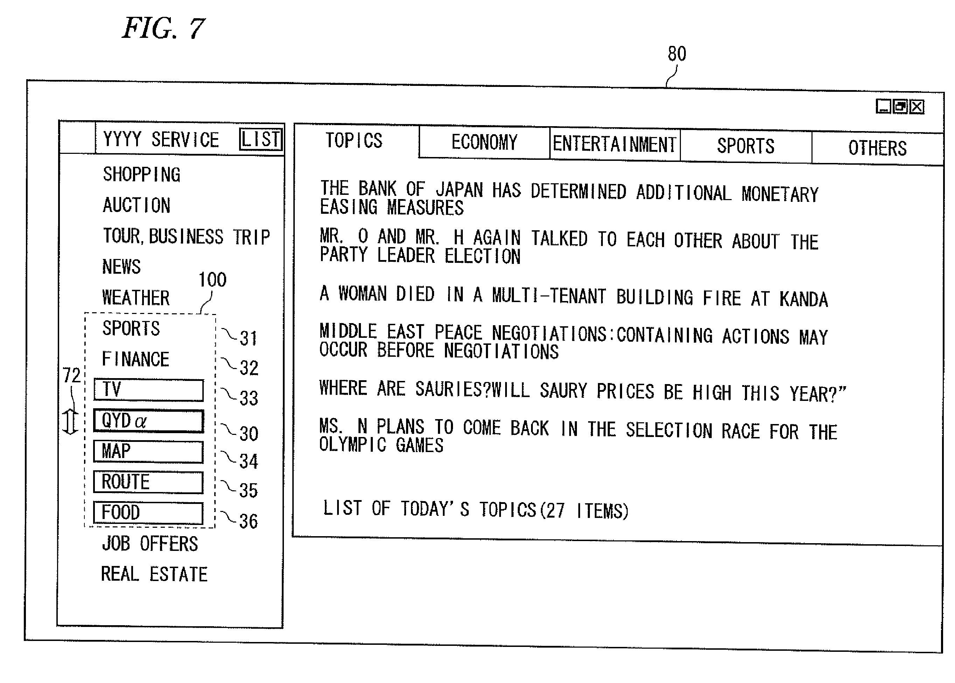

Fig. 7 shows an example in which a selecting module whose selected range is small relative to the display screen 80 is used in the electronic apparatus 1 according to the embodiment and long link displays are not displayed in a discriminated manner.

In this example, a selecting module having a small selected range 100 is used. For example, pieces of information indicating plural sizes of the selected range 100 is stored in the storage unit 16 of the flash memory 15. The user can change the size of the selected range 100 by causing these pieces of information to be displayed on the screen 8 by operating the remote controller 60 or the like and selecting one of them.

In this example, link displays "Sports" 31 and "Finance" 32 are not completely within the selected range 100 and hence are not displayed in a discriminated manner. On the other hand, link displays "TV" 33, "Qydα" 30, "Map" 34, "Route" 35, and "Food" 36 are displayed in a discriminated manner. In particular, the link display "Qydα" 30 is focus-displayed.

With the selected range 100 of the selecting module of this example, link displays that are longer than or equal to "Sports" 31 and "Finance" 32 are not displayed in a discriminated manner.

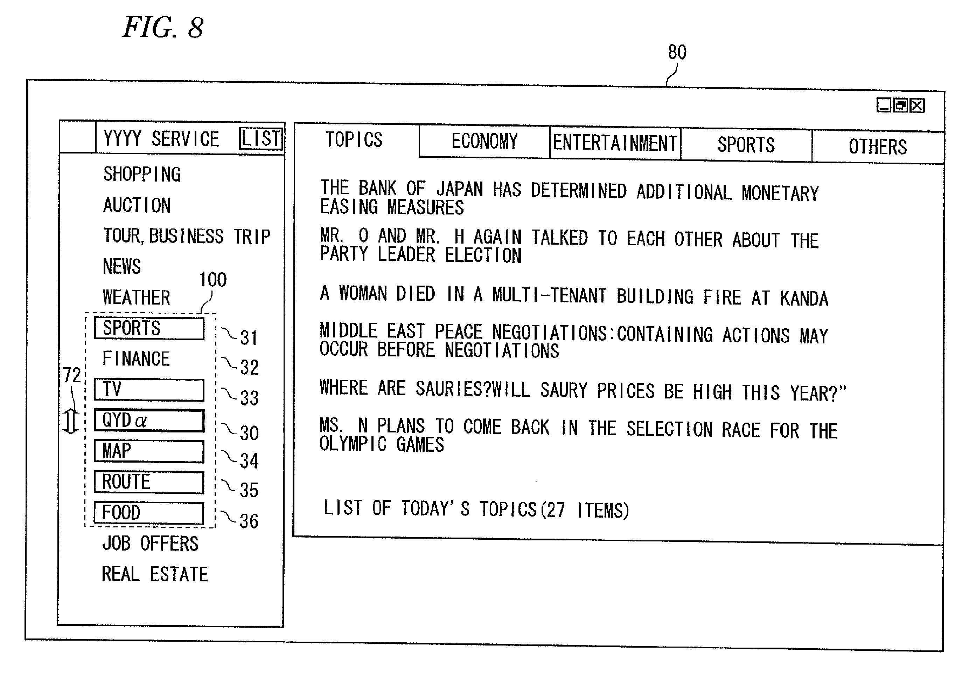

Fig. 8 shows an example in which a selecting module whose selected range is a little large relative to the display screen 80 is used in the electronic apparatus 1 according to the embodiment and short and medium-length link displays are displayed in a discriminated manner.

In this example, a selecting module whose selected range 100 is a little larger than in the example of Fig. 7 is used. As in the example of Fig. 7, pieces of information indicating plural sizes of the selected range 100 are stored in the storage unit 16 of the flash memory 15. The user can change the size of the selected range 100 by causing these pieces of information to be displayed on the screen 8 by operating the remote controller 60 or the like and selecting one of them.

With the selected range 100 of the selecting module of the example of Fig. 8, whereas a link display "Sports" 31 is within the selected range 100, a link display "Finance" 32 is not completely within the selected range 100. Therefore, the link display "Finance" 32 is not displayed in a discriminated manner.

On the other hand, link displays "Sports" 31, "TV" 33, "Qydα" 30, "Map" 34, "Route" 35, and "Food" 36 are displayed in a discriminated manner. In particular, the link display "Qydα" 30 is focus-displayed.

With the selected range 100 of the selecting module of this example, other link displays that are longer than or equal to "Finance" 32 are not displayed in a discriminated manner.

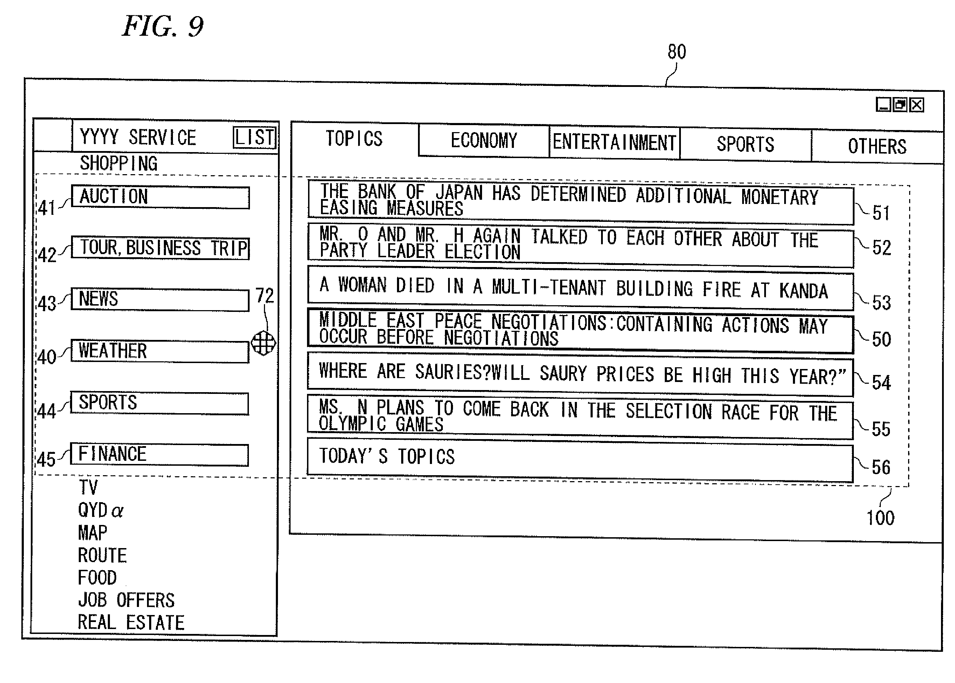

Fig. 9 shows an example in which a selecting module whose selected range is large relative to the display screen 80 is used in the electronic apparatus 1 according to the embodiment and every link display within the selected range can be selected.

In this example, a selecting module having a large selected range 100 is used. Link displays "Auction" 41, "Tour, business trip" 42, "News" 43, "Weather" 40, "Sports" 44, and "Finance" 45 that are located in the selected range 100 are each enclosed by a thin line so as to be discriminated from other link displays. The link displays 40-45 are relatively short or medium-length link displays.

Each of link displays "The Bank of Japan has determined additional monetary easing measures" 51, "Mr. O and Mr. H again talked to each other about the party leader election" 52, "A woman died in a multi-tenant building fire at Kanda" 53, "Where are sauries? Will saury prices be high this year?" 54, and "Ms. N plans to come back in the selection race for the Olympic Games" 55 are also enclosed by a thin line so as to be discriminated from other link displays. A link display "Middle East peace negotiations: Containing actions may occur before negotiations" 50 is focus-displayed, that is, enclosed by a thick line. The link displays 50 to 55 are long link displays.

A link display "Today's topics" 56 is also enclosed by a thin line so as to be discriminated from other link displays. This is a medium-length link display.

In this example, the link displays (which can be focus-displayed) are arranged in the top-bottom direction and the right-left direction in the selected range 100 of the selecting module so as to be discriminated from the other link displays. Therefore, the focus can be moved in the top-bottom direction and the right-left direction according to a movement instruction from the remote controller 60, for example.

In this example, the selected range 100 of the selecting module can be varied. The size of a link display that can be selected by the selecting module can be varied by varying the selected range 100 of the selecting module.

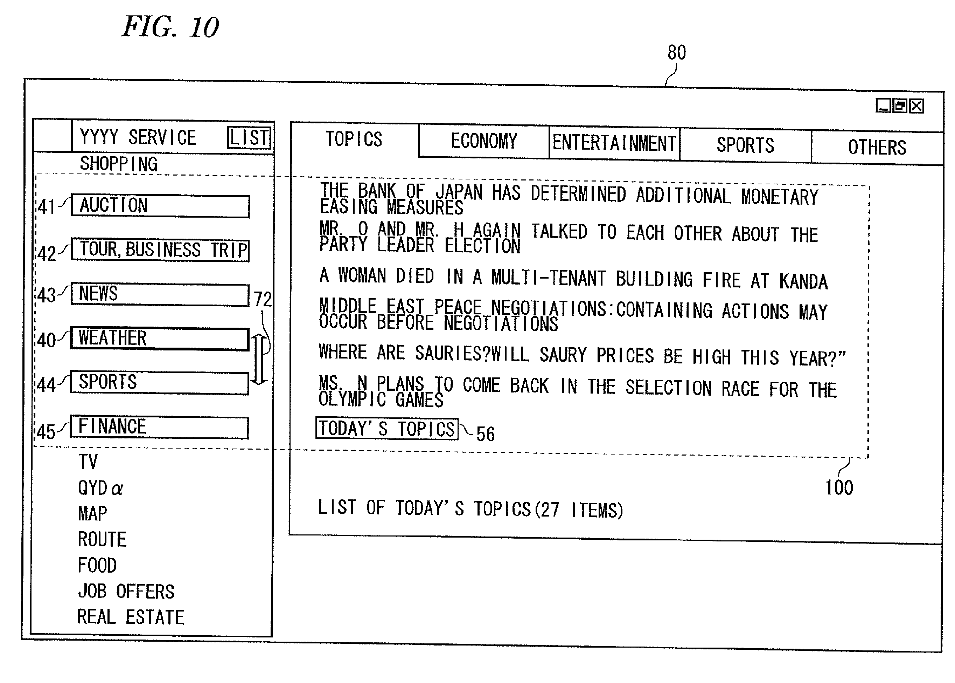

Fig. 10 shows an example in which a selecting module whose selected range is large relative to the display screen 80 is used in the electronic apparatus 1 according to the embodiment and long link displays are excluded from selected subjects in advance (only link displays in the selected range excluding the long link displays can be selected).

In this example, although a selecting module having a large selected range 100 is used as in the example of Fig. 9, long link displays are excluded from selected subjects in advance (only link displays in the selected range excluding the long link displays can be selected).

Although link displays "The Bank of Japan has determined additional monetary easing measures," "Mr. O and Mr. H again talked to each other about the party leader election," "A woman died in a multi-tenant building fire at Kanda," etc. are in the selected range 100 of the selecting module, these long link displays are excluded from selected subjects in advance. A control for this purpose can be performed by the controller 11.

Where link displays have differences in size (length) (i.e., short link displays and long link displays are displayed on the display screen 80), the long link displays are excluded from selected subjects of the selecting module and are not displayed in a discriminated manner.

In this example, a link display "Today's topics" 56 is enclosed by a thin line so as to be discriminated from other link displays. This is because the link display 56 is a medium-length one and hence is made a selected subject even though large link displays are excluded from selected subjects.

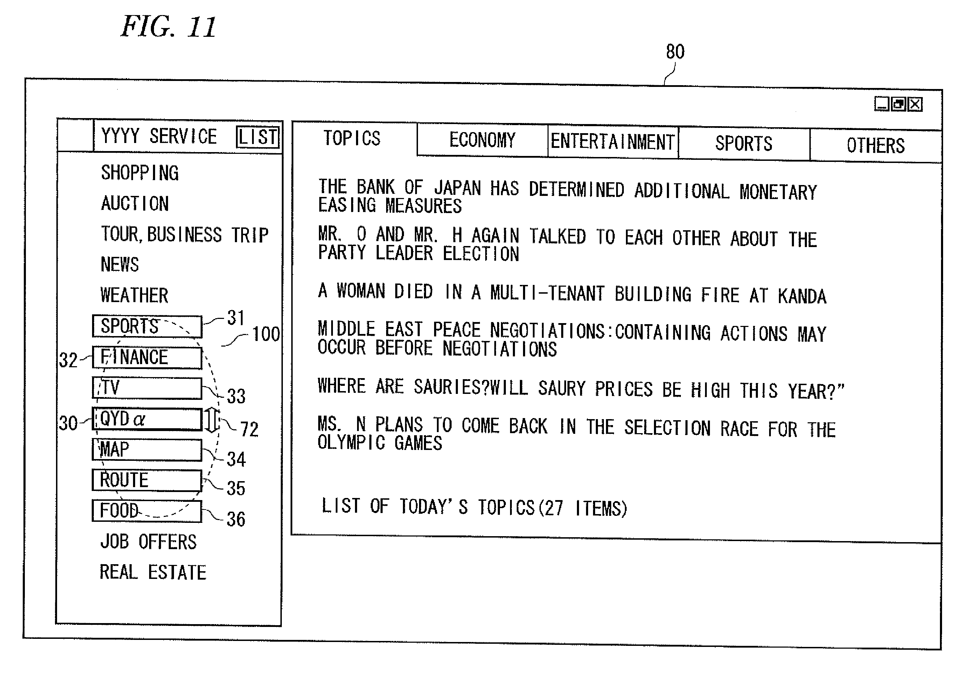

Fig. 11 shows an example in which an elliptical selected range is employed in the electronic apparatus 1 according to the embodiment and even link displays that are not completely within the selected range (i.e., link displays that overlap with the selected range) are displayed in a discriminated manner.

In this example, a selecting module has an elliptical selected range. It is determined that even link displays that are not completely within the selected range (i.e., link displays that overlap with the selected range) should be displayed in a discriminated manner, and they are done so. A control for this purpose is performed by the controller 11, for example.

Link displays "Sports" 31, "Finance" 32, "TV" 33, "Map" 34, "Route" 35, and "Food" 36 are each enclosed by a thin line so as to be discriminated from other link displays. A link display "Qydα" 30 is focus-displayed, that is, enclosed by a thick line.

Fig. 12 shows an example remote controller used in the electronic apparatus 1 according to the embodiment. Reference numeral 60 denotes a remote controller; 61, a power button; 62, numeral keys; 63, a channel up/down button; 64a-64d, direction input buttons (leftward, rightward, up, and down, respectively); 65, an enter button; and 110, a pointing device.

The user gives an instruction to power on or off the electronic apparatus 1 by operating the power button 61. The user gives the electronic apparatus 1 an instruction to tune in to a broadcast channel by operating the numeral keys 62 or the channel up/down button 63.

When the user operates the direction instructing modules (64a-64d), the electronic apparatus 1 receives a corresponding instruction signal from the remote controller 60 and the selecting module having a selected area is moved in the display screen 80.

Although in the embodiment the direction instructing modules (64a-64d) are cursor keys, four-direction keys, or the like, they may be a mouse wheel.

It is preferable that the pointing device 110 be a touch pad, a track ball, a mouse, or the like. The pointing device 110 may be in a tablet form, in which case the sets of coordinates of the tablet are correlated with those of the screen 8 so that the user can select each point in the form of absolute coordinates.

As mentioned above, when the user operates the enter button 65 of the remote controller 60, access is made to a desired site (Web page) corresponding to the focus-displayed link display.

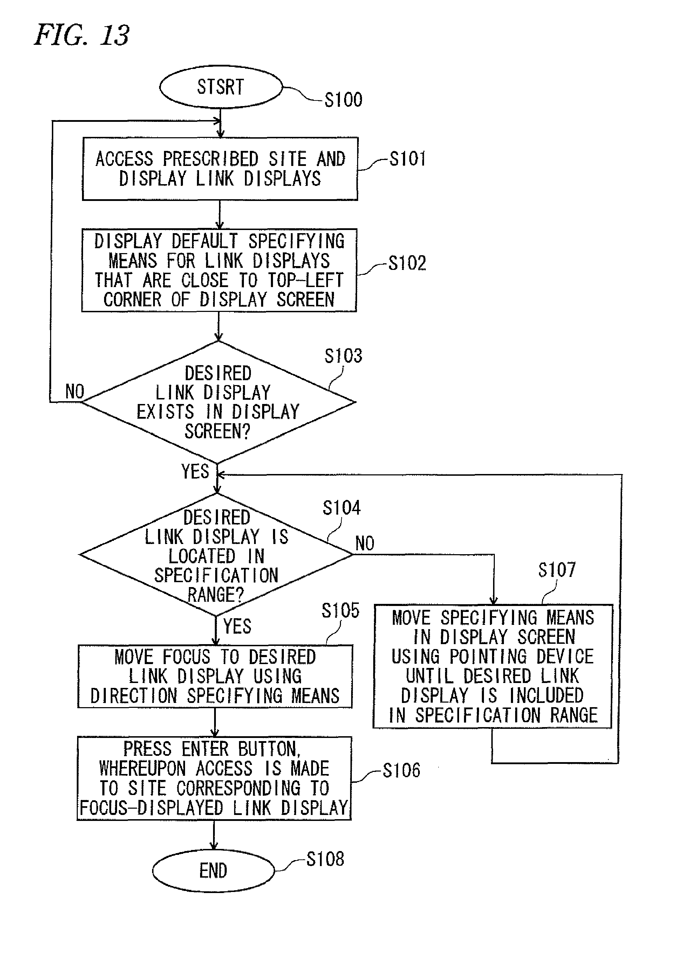

Fig. 13 is a flowchart of a process that is executed by the electronic apparatus 1 according to the embodiment. The process starts at step S 100. At step S101, the browser accesses a prescribed site and link displays are displayed. For example, access is made to a site "YYYY service" and a display screen 80 including link displays are displayed.

At step S102, a default selecting module is displayed for link displays that are close to the top-left corner of the display screen 80. At step S103, it is determined whether or not a link display desired by the user exists in the display screen 80. If the link display desired by the user exists in the display screen 80 (S103: yes), the process moves to step S104. If not (S103: no), the process returns to step S101.

At step S104, it is determined whether or not the desired link display is located in a selected range. If the desired link display is located in the selected range (S104: yes), the process moves to step S105. If not (S104: no), the process moves to step S107.

At step S105, the user moves the focus in the selected range by operating the direction instructing module so that the desired link display is focus-displayed.

At step S106, the user confirms that the desired link display is focus-displayed and presses the enter button 65 of the remote controller 60. Receiving this instruction, the electronic apparatus 1 accesses the Web page corresponding to the focus-displayed link display.

At step S107, the user moves the selecting module in the display screen 80 using the pointing device 110 until the desired link display is included in the selected range.

The process is finished at step S108.

For example, it is possible to configure the electronic apparatus 1 so that a link display that is close to the pointing cursor is focus-displayed if the former is closest to the latter.

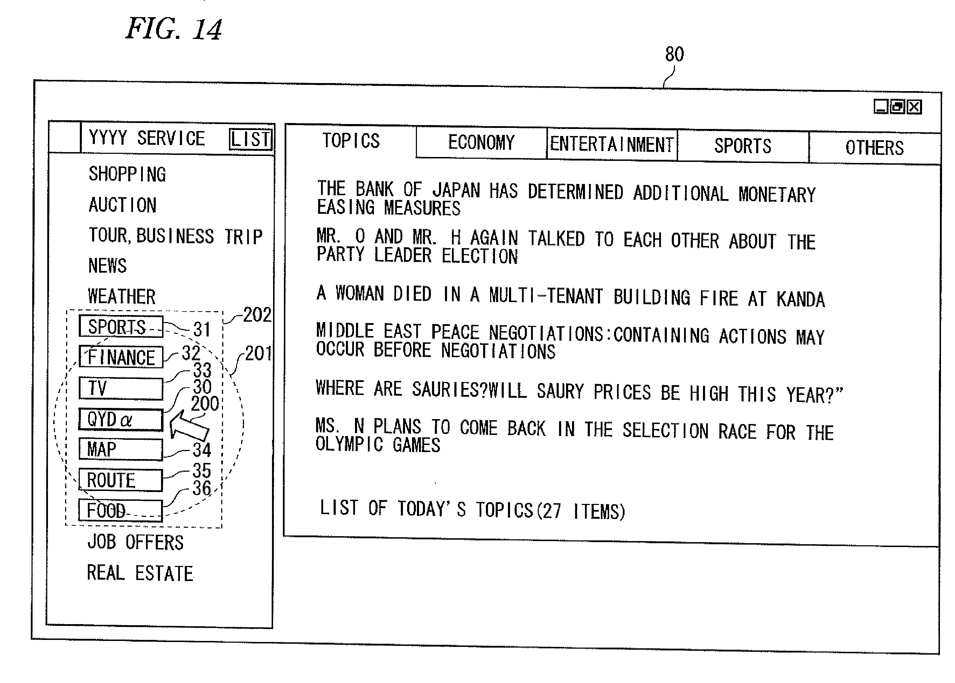

Fig. 14 shows another example manner of display of the selecting module used in the electronic apparatus 1 according to the embodiment.

Reference numeral 200 denotes a pointer; 201, a circular display which is a rough measure of a distance from the pointer 200; and 202, a prescribed selected range that is, for example, centered by the focus-displayed link display. The items 200-202 are shown in the display screen 80 including the link displays.

The pointer 200, which is displayed in the display screen 80 including the link displays, is moved in the display screen 80 according to an instruction given by operating the pointing device 110, for example.

In this example, the circle 201, for example, is displayed which is a rough measure of a distance from the pointer 200. The distance from the pointer 200 can be varied as appropriate, and, for example, is set larger than the lengths of link displays to be displayed in a discriminated manner.

In this example, for example, the link display ("Qydα" 30) closest to the pointer 200 is focus-displayed. The prescribed selected range 202 centered by the focus-displayed link display "Qydα" 30 is indicated by a broken line.

Link displays "Sports" 31, "Finance" 32, "TV" 33, "Map" 34, "Route" 35, and "Food" 36 which are located in the thus-displayed selected range 202 are each enclosed by a thin-line rectangle so as to be discriminated from other link displays.

The displayed selected range 202 is centered by the currently focus-displayed link display "Qydα" 30. In other words, when the selected range 202 is shown, one link display in it is focus-displayed.

For example, the controller 11 determines, through calculation, a link display that is closest to the pointer 200 and focus-displays the thus-determined link display.

The selected range 202 can be varied according to the sizes (lengths) of link displays.

The selected range 202 is moved in the display screen 80 according to an instruction from the pointing device 110, for example. During that course, as described above, a link display that is closest to the pointer 200 is determined through calculation and focus-displayed.

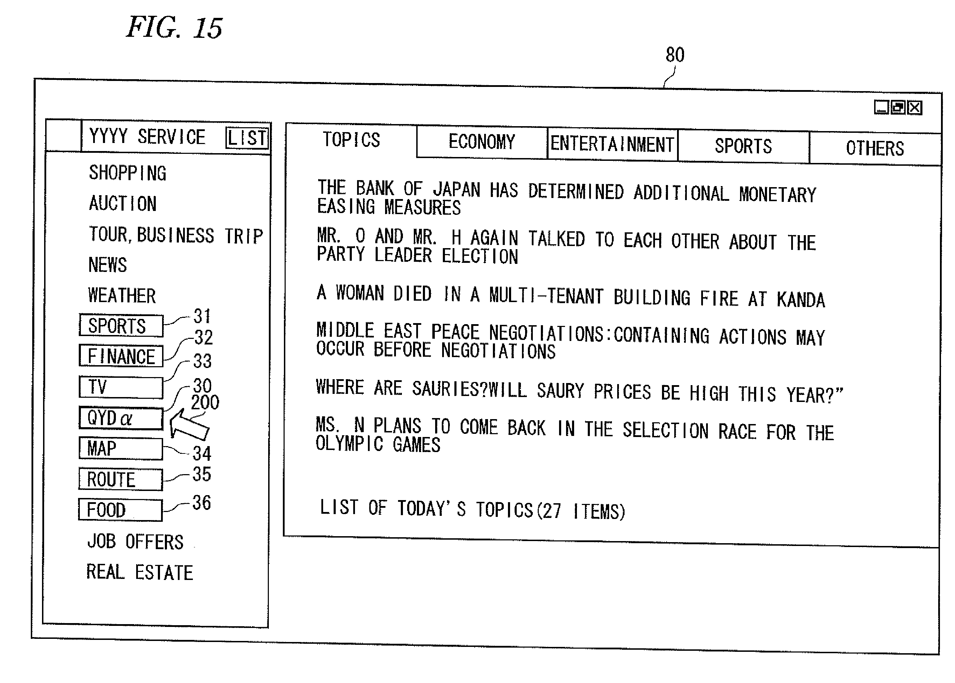

Fig. 15 shows another example manner of display of the selecting module used in the electronic apparatus 1 according to the embodiment.

This example is different from the example of Fig. 14 in that no distance rough measure is displayed and no prescribed selected range centered by a focus-displayed link display is displayed.

That is, in this example, a pointer 200 relating to the selecting module is displayed. Although distances from the pointer 200 are calculated, no distance rough measure is displayed.

A link display "Qydα" 30 which is closest to the pointer 200 is focus-displayed. However, no prescribed selected range centered by the focus-displayed link display "Qydα" 30 is displayed.

Link displays "Sports" 31, "Finance" 32, "TV" 33, "Map" 34, "Route" 35, and "Food" 36 which are located in the selected range are each enclosed by a thin-line rectangle so as to be discriminated from other link displays.

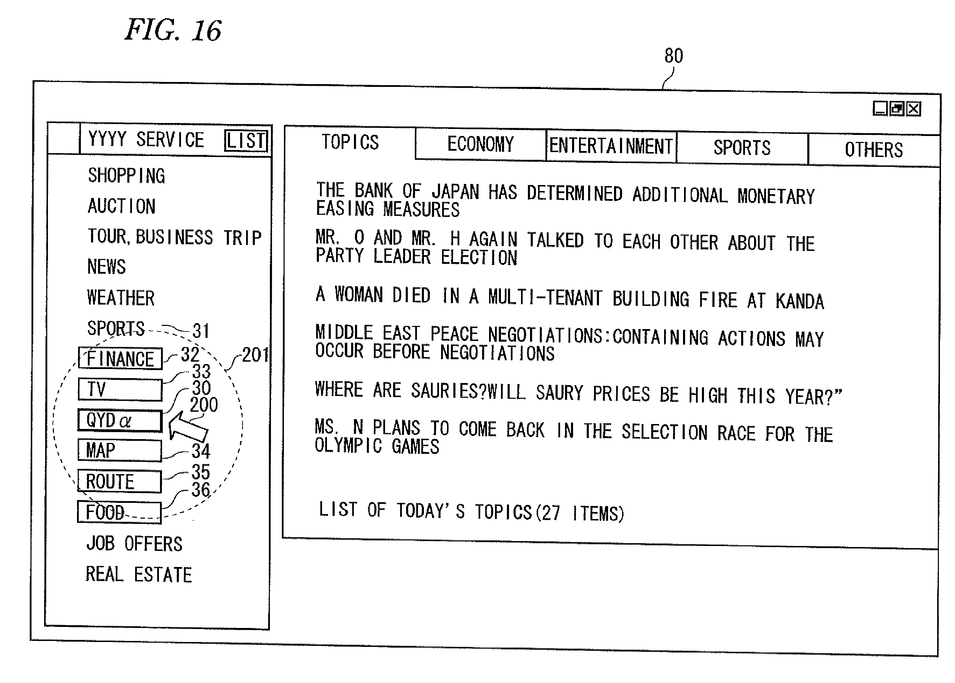

Fig. 16 shows yet another example manner of display of the selecting module used in the electronic apparatus 1 according to the embodiment.

In this example, link displays that overlap with or are completely included in a circle 201 having a pointer 200 as the center and having a prescribed radius are displayed so as to be discriminated from other link displays.

In this example, the pointer 200 relating to the selecting module is displayed. The circle 201 which is a rough measure of a prescribed distance from the pointer 200 is also displayed.

The link display ("Qydα" 30) closest to the pointer 200 is focus-displayed.

Link displays that overlap with or are completely included in the circle 201 are displayed so as to be discriminated from other link displays. That is, link displays "Finance" 32, "TV" 33, "Map" 34, "Route" 35, and "Food" 36 are each enclosed by a thin-line rectangle so as to be discriminated from other link displays. On the other hand, a link display "Sports" 31 which does not overlap with the circle 201 is not displayed in a discriminated manner.

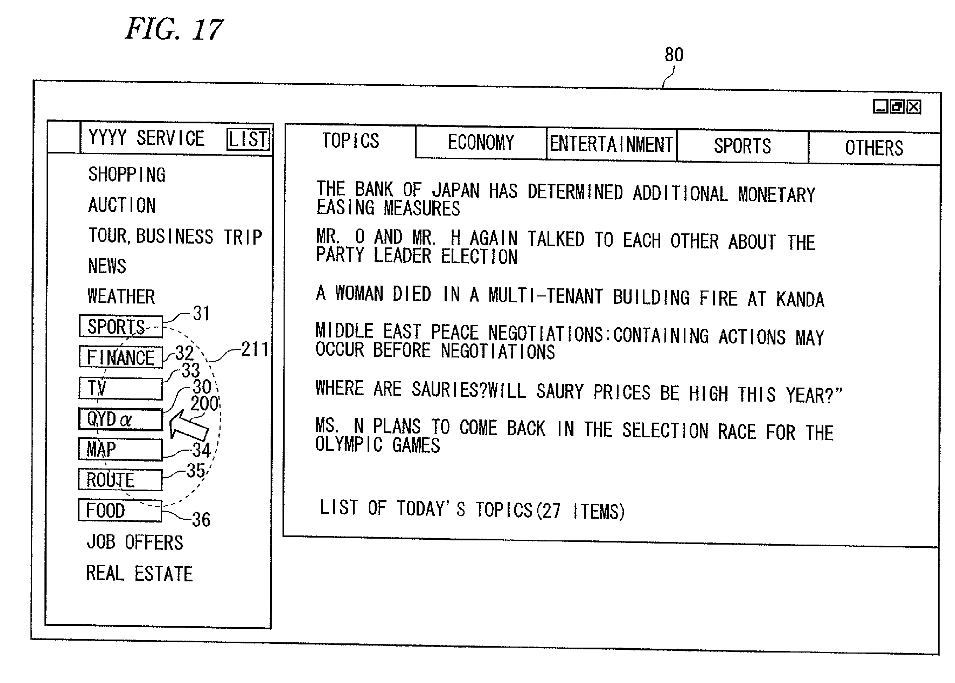

Fig. 17 shows another example manner of display of the selecting module used in the electronic apparatus 1 according to the embodiment.

In this example, an ellipse 211, rather than a circle (the examples of Figs. 14 and 16), is displayed as a rough measure of distances from a pointer 200.

In this example, the pointer 200 relating to the selecting module is displayed. And the ellipse 211 is displayed as a rough measure of distances from the pointer 200.

The link display ("Qydα" 30) closest to the pointer 200 is focus-displayed.

Link displays that overlap with or are completely included in the ellipse 211 are displayed so as to be discriminated from other link displays. That is, link displays "Finance" 32, "TV" 33, "Map" 34, "Route" 35, and "Food" 36 are each enclosed by a thin-line rectangle so as to be discriminated from other link displays. A link display "Sports" 31 which overlaps with the ellipse 211 is also displayed in a discriminated manner.

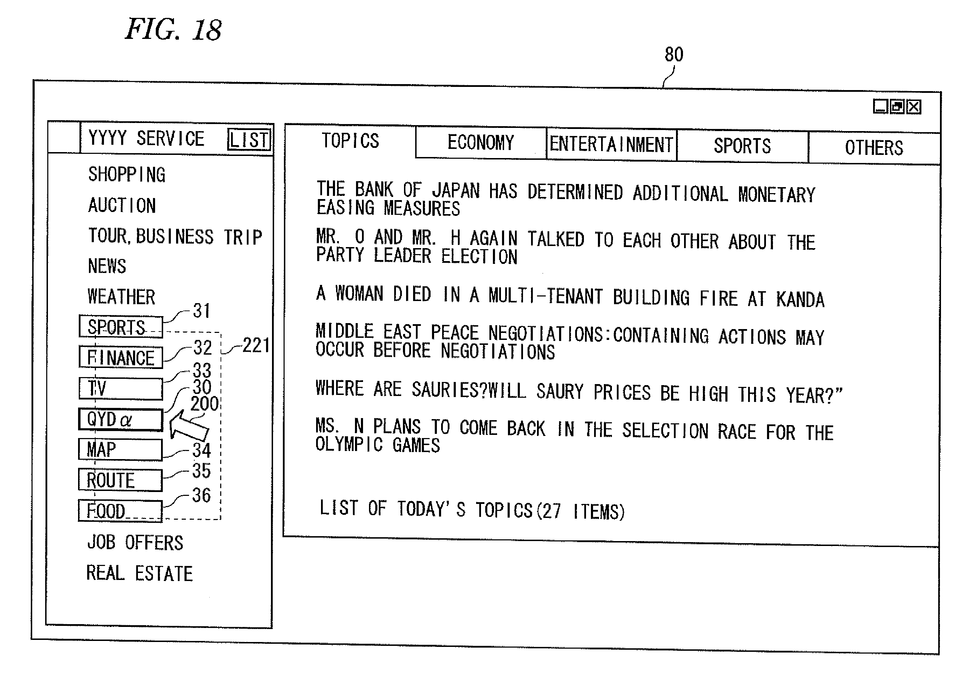

Fig. 18 shows yet another example manner of display of the selecting module used in the electronic apparatus 1 according to the embodiment.

In this example, a rectangle 221 is displayed as a rough measure of a distance from a pointer 200.

In this example, as in the examples of Figs. 14-17, the pointer 200 relating to the selecting module is displayed. And the rectangle 221 is displayed as a rough measure of a prescribed distance from the pointer 200.

The link display ("Qydα" 30) closest to the pointer 200 is focus-displayed.

Link displays that overlap with or are completely included in the rectangle 221 are displayed so as to be discriminated from other link displays. That is, link displays "Sports" 31, "Finance" 32, "TV" 33, "Map" 34, "Route" 35, and "Food" 36 are each enclosed by a thin-line rectangle so as to be discriminated from other link displays.

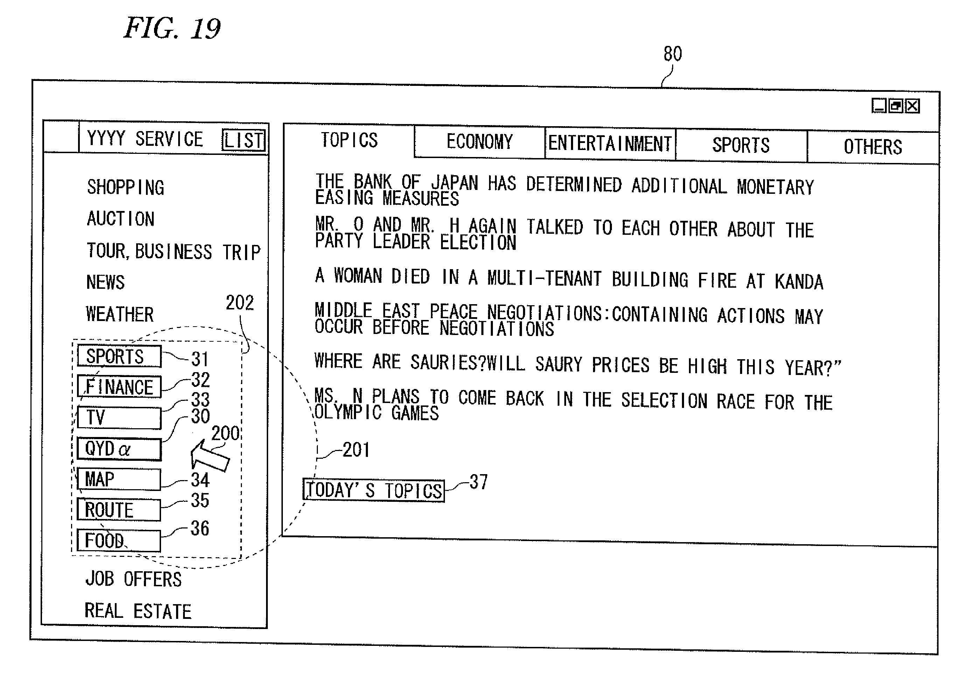

Fig. 19 shows a further example manner of display of the selecting module used in the electronic apparatus 1 according to the embodiment.

This example is a combination of the examples of Figs. 14 and 16. That is, the link display ("Qydα" 30) closest to a pointer 200 is focus-displayed. A prescribed selected range 202 centered by the focus-displayed link display "Qydα" 30 is indicated by a broken line. Link displays that overlap with or are completely included in a circle 201 having the pointer 200 as the center and having a prescribed radius are displayed so as to be discriminated from other link displays.

In this example, link displays link displays "Sports" 31, "Finance" 32, "TV" 33, "Map" 34, "Route" 35, and "Food" 36 which are located in the displayed selected range 202 are each enclosed by a thin-line rectangle so as to be discriminated from other link displays.

A link display "Today's topics" 37 which overlaps with the circle 201 is also enclosed by a thin-line rectangle so as to be discriminated from other link displays.

For example, the electronic apparatus 1 may be configured so that a link display whose width, length, or area is greater than a prescribed value is excluded from selected subjects.

For example, the electronic apparatus 1 may be configured so that the range of selected subjects centered by a focus-displayed link display may be expanded, the selected subjects consisting of link displays whose widths, lengths, and areas are smaller than prescribed values.

In the invention, a selecting module has a selected range that occupies a prescribed area in a display screen in which link displays are displayed. The selecting module is displayed in such a manner that link displays that are regarded as belonging to the selected range are displayed in a first display form so as to be discriminated from link displays that are not regarded as belonging to the selected range and a focused link display is displayed in a second display form that is different from the first display form.

The selecting module is moved in the display screen according to an instruction that is output from a pointing device.

A focus is moved between the link displays that are displayed in the first display form or the second display form according to a movement instruction that is output from a direction instructing module.

With the above configurations, the invention facilitates the user's selecting a desired link display or accessing a desired link destination by operating a remote controller and thereby increases the convenience of the user in such electronic apparatus as TV receivers.

While certain embodiment has been described, the exemplary embodiment has been presented by way of example only, and is not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

## Claims

1. An electronic apparatus comprising:
a display unit configured to display a display screen including link displays which are display information of link destinations; and
a selecting module configured to select a prescribed area in the display screen as a selected range, to display link displays included in the selected range in a first display form which is discriminated from link displays excluded from the selected range, and to display a focused link display in a second display form which is different from the first display form.

2. The apparatus of claim 1, wherein the electronic apparatus is configured to receive an instruction that is output from a pointing device for giving a pointing operation in the display screen, and the selecting module is configured to move in the display screen according to the instruction.

3. The apparatus of claim 1, wherein the electronic apparatus is configured to receive a movement instruction that is output from a direction instructing module for instructing a focus to move in a prescribed direction in the display screen, and the focus is configured to be moved between the link displays that are displayed in one of the first display form and the second display form according to the movement instruction.

4. The apparatus of claim 1 further comprising:
a selected range varying means configured to vary the selected range of the selecting module.

5. The apparatus of claim 1, wherein the electronic apparatus is configured so that sizes of link displays that are selected by the selecting module are varied by varying the selected range of the selecting module.

6. The apparatus of claim 1, wherein when link displays have differences in size, link displays that are larger than a prescribed size are excluded from selected subjects of the selecting module and are not displayed in a discriminated manner.

7. A display method of a display screen comprising:
displaying a display screen including link displays on a screen;
selecting a prescribed area in the display screen as a selected range;
displaying link displays included in the selected range in a first display form which is discriminated from link displays excluded from the selected range; and
displaying a focused link display in a second display form which is different from the first display form.
